# EUROPEAN PATENT APPLICATION

(11) **EP 1 367 574 A2**
(43) Date of publication of application: **03.12.2003**
(21) Application number: 03253209.5
(22) Date of filing: 22.05.2003
(51) Int. Cl.: G11B 7/12

(54) **Pickup device**

(30) Priority: 27.05.2002 JP 2002152040
(71) Applicant: Pioneer Corporation, Meguro-ku, Tokyo (JP)
(72) Inventor: Sasaki, Yoshio, c/o Pioneer Corporation, Tokorozawa-shi, Saitama-ken (JP); Furukawa, Masakazu, c/o Pioneer Corporation, Tokorozawa-shi, Saitama-ken (JP); Adachi, Masatoshi, c/o Pioneer Corporation, Tokorozawa-shi, Saitama-ken (JP); Nakagawa, Hidenori c/o Pioneer Corporation, Tokorozawa-shi, Saitama-ken (JP); Uchiumi, Satoshi c/o Pioneer Corporation, Tokorozawa-shi, Saitama-ken (JP)
(74) Representative: Haley, Stephen

(57) **Abstract**

A pickup device (10) has various controlled elements (13) such as a light source and a sensor which need to be electrically controlled. The controlled elements (13) are connected with an in-pickup control element (40) via internal signal lines and are controlled by control signals supplied from the in-pickup control element. The in-pickup control element is connected with an external microcomputer (25) via a connector (16) and an external signal line (30) and receives a control signal or the like from the microcomputer (25). With this structure, the controlled elements in the pickup device are basically controlled, not by the external microcomputer, but by the in-pickup control element. Therefore, the signal lines for supplying the control signals to the controlled elements canbe short signal lines only in the pickup. As a result, problems of influence of a noise and a delay of a signal are reduced, and thus the controlled elements can be operated accurately at the time of high speed recording. Moreover, the shortening of the signal lines contributes also to miniaturization of the pickup itself.

## Description

The present invention relates to a pickup device used for recording information onto and/or reproducing information from an optical recording medium.

A recording/reproducing apparatus for optical discs such as a CD-R (Compact Disc-Recordable), a CD-RW (Compact Disc-ReWritable), a DVD-R (DVD-Recordable) and a DVD-RW (DVD-ReRecordable) has a pickup device which irradiates a laser light or the like onto a recordingmedium so as to record/reproduce information. Generally the pickup device has a light source such as a laser diode, an LD (Laser Diode) driver, an optical system such as an objective lens, and a photodetector. The LD driver drives and controls the laser diode. The optical system guides a laser light emitted from the light source to an optical disc. The photodetector receives the laser light reflected from the optical disc and converts it into an electric signal.

The recording/reproducing of information onto/from the optical disc is controlled by a microcomputer included in an optical disc drive device. Namely, a control signal for recording/reproducing is supplied from the microcomputer to the optical pickup.

A conventional pickup device mainly has the laser light source and the optical system as main components as mentioned above, and does not include many components which are required to be electrically controlled. For this reason, the control signals for those electrically-controlled components are supplied directly from the microcomputer of the drive device to the respective components in the pickup device.

However, the increase of a recording/reproducing speed in recent years necessitates high speed process also in the pickup device. Moreover, as many types of optical discs have appeared and the pickup device and the drive device are needed to be miniaturized, the pickup device itself tends to be provided with a lot of electrically-controlled components. Therefore, if the control signals are supplied from an external microcomputer so that the components in a pickup are controlled electrically in a conventional manner, a processing load of the microcomputer increases due to the increase of the recording/reproducing speed, and thus there arises problems that the processing speed of the microcomputer becomes insufficient and the noise increases due to the increase of the frequency of the control signal.

The present invention has been achieved in order to solve the above problems. It is an object of this invention to provide a pickup device which is capable of coping with the high speed recording/reproducing without causing an increase in a processing load of a microcomputer and a noise even in the case where the device includes many electrically-controlled components.

According to one aspect of the present invention, there is provided a pickup device including: a controlled element to be electrically controlled; a connector connected with an external microcomputer via an external signal line; and an in-pickup control element connected with the controlled element via an internal signal line for transmitting a control signal via the internal signal line and controlling the controlled element.

The above pickup device has various controlled elements such as a light source and a sensor which need to be electrically controlled. The controlled elements are connected with the in-pickup control element via the internal signal lines and are controlled by the control signals supplied from the in-pickup control element. On the other hand, the in-pickup control element is connected with the external microcomputer via the connector and the external signal line and receives various control signals from the microcomputer. With this configuration, the controlled elements in the pickup device can be basically controlled, not by the external microcomputer, but by the in-pickup control element. Also, the signal lines for supplying the control signals to the controlled elements can be short signal lines only in the pickup. As a result, problems of influence of a noise and a delay of the signal can be reduced, and thus the controlled elements can be operated accurately at the time of high speed recording. Moreover, shortening the signal lines also contributes to the miniaturization of the pickup itself.

The controlled element may include a laser diode driver for driving a laser diode generating a laser light, and the in-pickup control element may receive the control signal from the microcomputer via the connector and supplies the control signal to the laser diode driver via the internal signal line. According to this feature, the control signal input from the external microcomputer is supplied to the laser diode driver via the in-pickup control element. Therefore, the laser diode driver can be controlled in the pickup, based on the control signal input externally, under the supervision of the in-pickup control element.

The in-pickup control element may receive and store recording power setting value information for test recording for determining an optimum recording power from the microcomputer before the test recording is executed, and may supply the stored recording power setting value to the laser diode driver at the time of the test recording to execute the test recording. According to this feature, it is not necessary to supply the recording power setting value information for the test recording from the microcomputer to the laser diode driver at real time during the test recording. As the recording speed is increased, the increase of a transmission speed of the recordingpower setting information for the test recording is also necessary. For this reason, the transmission speed is increased by the in-pickup element, and a load of the microcomputer can be reduced. Moreover, since the signal line for transmitting the control information signal which changes at high speed can be shortened, a bad influence of a noise can be also reduced.

The in-pickup control element may start the test recording in response to a starting instruction signal for the test recording. According to this feature, in such a structure that the microcomputer transmits the starting instruction signal for the test recording, once the microcomputer supplies the starting instruction signal for the test recording to the in-pickup control element, the microcomputer does not have to perform any particular operation for the test recording thereafter. For this reason, the load of the microcomputer can be greatly reduced.

The controlled element may include a high frequency superimposing circuit for superimposing a high frequency electric current on the recording signal supplied to the laser diode, and the in-pickup control element may control on/off of superimposing of the high frequency electric current or a quantity of the high frequency electric current to be superimposed by the control signal supplied to the high frequency superimposing circuit via the internal signal line. There is a great possibility that the high frequency signal to be superimposed on the driving signal of the laser diode becomes a noise source, but according to the above feature, the control signal line is shortened, thereby suppressing generation of a noise.

The controlled element may include an optical correcting element having a liquid crystal element, and the in-pickup control element may supply a driving signal for driving the liquid crystal element to the liquid crystal element via the internal signal line. According to this feature, for example, in the case where a liquid crystal driving signal is used for optical correction such as tilt correction, when the driving signal is, for example, a PWM signal which has a great signal level fluctuation, an effect that the noise is reduced by shortening the signal lines can be obtained.

The controlled element may include a temperature sensor for detecting a temperature of the pickup device , and the in-pickup control element may receive temperature data detected by the temperature sensor via the internal signal line. According to this feature, it is not necessary to supply the temperature data obtained by the temperature sensor to the external microcomputer, and the control line for this can be omitted. Moreover, in the case where an analog type temperature sensor for outputting the temperature as a voltage level is used, the temperature data may be transmitted via a short signal line connected to the in-pickup control element arranged in the pickup. For this reason, it can be prevented that the noise is added during transmission and a detected temperature value fluctuate.

The controlled element may include a photoelectric converting element for receiving the laser light and outputting a corresponding electric signal, and the in-pickup control element may supply a control signal for changing a gain of the photoelectric converting element to the photoelectric converting element via the internal signal line. According to this feature, since the photoelectric converting element is easily influenced by an external noise, the photoelectric converting element is connected with the in-pickup control element by a short signal line, thereby reducing the influence of noise.According to another aspect of the present invention, there is provided a drive device including: a controlled element to be electrically controlled; a connector connected with an external microcomputer via an external signal line; an in-pickup control element connected with the controlled element via an internal signal line for transmitting a control signal via the internal signal line and controlling the controlled element; an external board on which the external microcomputer is arranged; and a single pickup board on which the controlled element and the in-pickup control element are arranged, wherein the pickup board is connected with the external board via the connector and the external signal line.

According to this feature, since the controlled element in the pickup and the in-pickup control element are arranged on one board, the controlled element can be controlled in the board independently of an external board or the like. Moreover, an electric source system or the like is independent of the external board on which the microcomputer is arranged, so that introduction of a noise can be prevented easily.

The nature, utility, and further features of this invention will be more clearly apparent from the following detailed description with respect to preferred embodiment of the invention when read in conjunction with the accompanying drawings briefly described below.

In the drawings:
FIG. 1 is a block diagram schematically showing a structure of a part of a drive device having a pickup according to the present invention;
FIG. 2 is a schematic block diagram of electric parts in the pickup shown in FIG. 1; and
FIG. 3A and 3B are diagrams schematically showing examples of a tilt correcting liquid crystal element shown in FIG. 2.

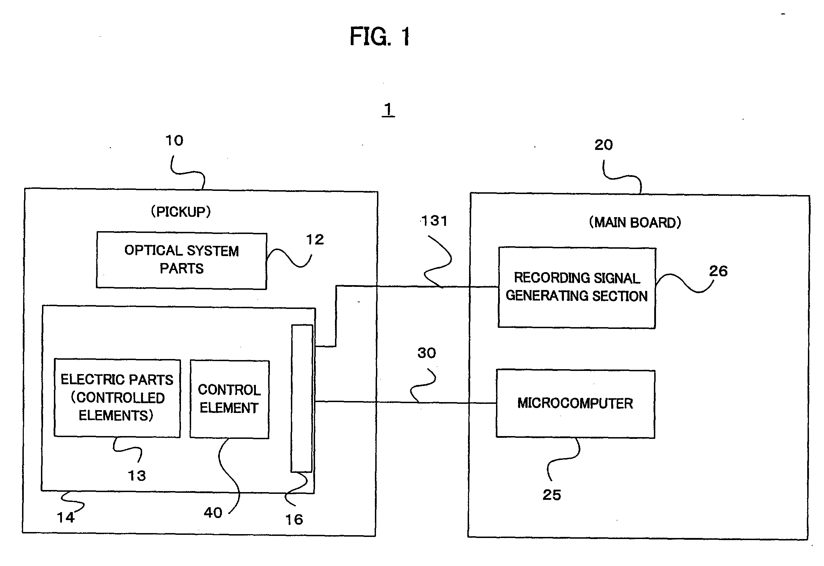

The preferred embodiments of the present invention will now be described below with reference to the attached drawings. FIG. 1 is a block diagram schematically showing a structure of a part of a drive device having a pickup according to the present invention. The drive device 1 records information onto various optical discs such as a DVD-R and a DVD-RW and reproduces the recorded information. FIG. 1 shows only a pickup 10 and a main board 20 which is electrically connected with the pickup 10 in the drive device 1.

The pickup 10 includes optical system parts 12 including an objective lens and the like, electric parts 13 including a laser diode (LD) driver and the like, and a control element 40. The electric parts 13 and the control element 40 are arranged on a flexible board 14. An end portion of the flexible board 14 is connected with a connector 16.

On the main board 20, a microcomputer 25 for controlling an entire operation of the drive device 1 and a recording signal generating section 26 for generating data to be recorded onto the optical disc are arranged. The microcomputer 25 on the main board 20 is electrically connected with the connector 16 of the pickup 10 by a signal line 30. The signal line 30 includes data lines and some control signal lines. The recording data generated by the recording signal generating section 26 are transmitted to the pickup 10 via a signal line 131 different from the signal line 30. In this case, the recording data can be supplied to the LD driver via the control element 40 and also can be supplied directly to the LD driver without passing through the control element 40. It is noted that the signal lines 30 and 131 can be constituted as one signal line.

In such a manner, the main board 20 and the pickup 10 of the drive device 1 are electrically connected via the signal line 30. Therefore, if the electric parts in the pickup 10 are controlled by the control signals from the microcomputer 25 on the main board 20, a lot of signal lines 30 are required for connecting the microcomputer 25 on the main board 20 with the flexible board 14 on the pickup 10.

Therefore, in the present invention, the control element 40 is provided on the pickup 10, and the control element 40 controls the electric parts provided in the pickup 10 to the best of its ability, so that opportunity of the communication between the pickup 10 and the microcomputer 25 is reduced.

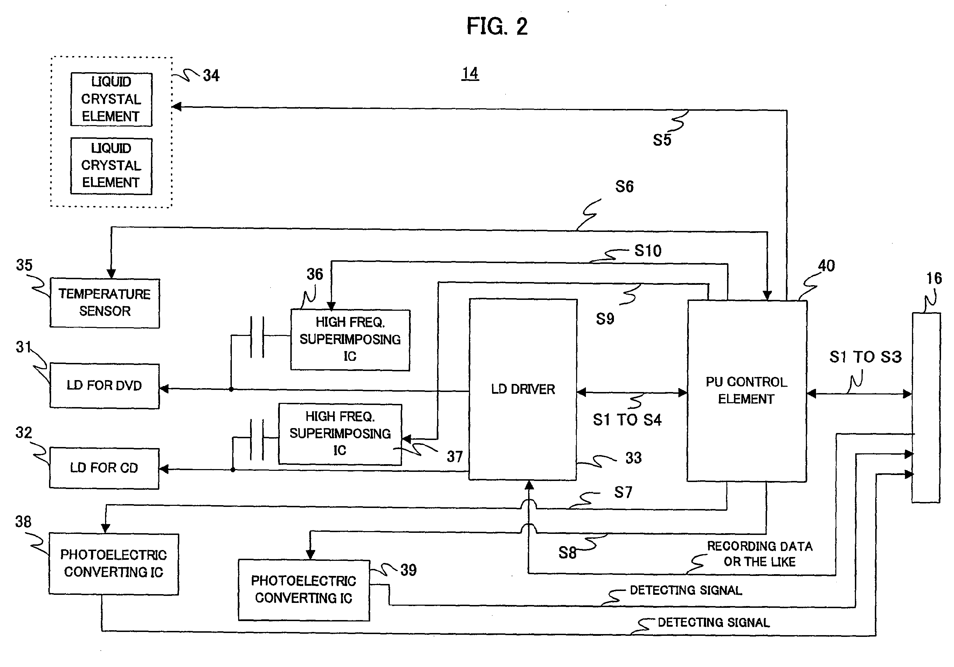

FIG. 2 shows a schematic block diagram of the parts in the pickup 10. As shown, the pickup 10 includes a laser diode (LD) 31 for DVD recording/reproducing, a laser diode (LD) 32 for CD recording/reproducing, an LD driver 33, liquid crystal elements 34, a temperature sensor 35, a high frequency superimposing IC 36, a high frequency superimposing IC 37, a photoelectric converting IC 38, an photoelectric converting IC 39 and an in-pickup control element (hereinafter, referred to as "PU control element") 40. The liquid crystal elements 34 for optical correction adjust a tilt or the like of an optical disc. The temperature sensor 35 is of a digital type and detects a temperature of the pickup 10 . The high frequency superimposing IC 36 supplies a high frequency superimposing electric current to the laser diode 31 for DVD reproduction. The high frequency superimposing IC 37 supplies a high frequency superimposing electric current to the laser diode 32 for CD reproduction. The photoelectric converting IC 38 detects a returned laser light from the disc and outputs an RF signal. The photoelectric converting IC 39 is arranged in a vicinity of the laser light source and detects an output laser power from the laser light source. The in-pickup control element 40 entirely controls the pickup 10.

Next, mainly by referring to FIG. 1, an operation of the respective components in the pickup 10 of the present invention will be explained. The present invention is characteristic in that the PU control element 40 is provided in the pickup 10 and the PU control element 40 executes main control processes within the pickup 10. As a result, opportunity of the communication between the pickup 10 and the microcomputer 25 on the main board 20 can be reduced, and various disadvantages which are possibly caused when the components in the pickup 10 are electrically controlled by the microcomputer 25 can be suppressed. The respective components will be explained below.

### (1) Calibration process of recording power

In a disc such as a DVD-R, before information is actually recorded on the disc, a calibration process of a recording laser power (write power) is executed. This process is called as OPC (Optimum Power Control). At the time of OPC, the test recording is carried out on a disc with varying the write power, and the test recorded signal is reproduced and evaluated to determine an optimum write power. However, if the high speed recording is carried out, it is necessary to control the LD driver at high speed. It is supposed that, for example, the test recording is carried out at the speed four times higher than the normal speed and with changing the write power in each two frames in a test recording area of the disc. In this case, it is necessary to complete the process of changing the write power within about 27 µsec. The process of changing the write power is executed by changing data S3 supplied to the LD driver 33. If this process is executed by the microcomputer 25 arranged outside of the pickup 10, the communication load between the microcomputer 25 and the LD driver 33 increases and the signal line for the high speed serial communication becomes longer. The signal line for transmitting a high speed signal easily becomes a noise source and is easily influenced by an external noise.

In this respect, in the pickup 10 of the present invention, a write power setting process at the time of OPC is executed by the PU control element 40. Therefore, the signal line for the high speed serial communication can be shortened to about not more than 2 to 3 cm, thereby preventing the signal line from generating noise and being influenced by the external noise. Moreover, since the process during OPC is executed by the PU control element 40, the microcomputer 25 can supply the setting values of the write power into the PU control element 40, before the OPC starts, by means of normal speed communication so that the setting values are stored in a memory or the like in the PU control element 40. In this case, the microcomputer 25 supplies only the OPC starting instruction signal to the PU control element 40, and the write power changing processes thereafter can be executed only by the PU control element 40. As a result, the LD driver 33 does not need to communicate with the microcomputer 25, thereby reducing the communication load of the microcomputer 25. Moreover, if the recording speed is further increased in the future or if various parameters of the test recording should be changed in order to determine recording conditions other than the recording power, it is preferred that the parameter setting values for the test recording are previously stored in the PU control element 40, so that the advantage resulting from the reduction in the communication load with the microcomputer 25 and the shortening of the signal line becomes larger.

### (2) Control of Optical Correcting Liquid Crystal Element

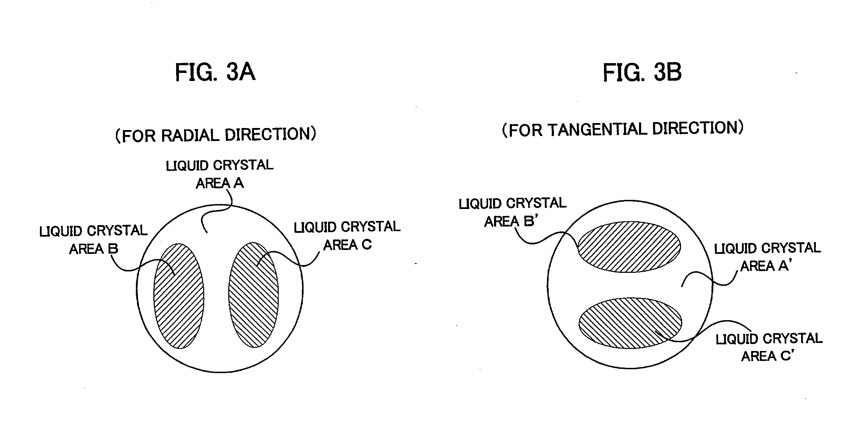

The tilt-correction liquid crystal elements 34, which are one example of optical correcting liquid crystal elements shown in FIG. 2, adjust transmittance of the laser light from the laser light source by mean of the liquid crystal elements arranged in a radial direction and a tangential direction of the disc so as to correct a tilt of the pickup 10 with respect to the optical disc. For example, if one of the elements shown in FIGS. 3A and 3B is used for the correction in the disc radial direction and the other of the elements is used for the correction in the tangential direction, six control voltages are required as the control signal S5 for six liquid crystal areas, in total, and they are often supplied as PWM (Pulse Width Modulation) signals. Therefore, if the control signal is supplied from the microcomputer 25 to the tilt-correction liquid crystal elements 34, since it is necessary to supply the PWM signal using a long signal line, the signal line becomes the noise source or is easily influenced by an external noise. Moreover, as the frequency of the control signal becomes higher, the influence of the noise becomes greater. On the contrary, when the tilt-correction liquid crystal elements 34 are controlledby the PU control element 40 like the present invention, it is necessary that the signal line is arranged only within the pickup 10 . Therefore, the space saving and the miniaturization of the pickup can be more easily achieved than the case where the six signal lines are supplied from the microcomputer 25 to the tilt-correction liquid crystal elements 34.

### (3) Control of Temperature Sensor

As shown in FIG. 2, the pickup 10 is provided with a temperature sensor 35 for detecting the temperature of the pickup. In the case of a temperature sensor, the temperature data S6 is output from the temperature sensor 35. In the present invention, it is sufficient that the temperature data S6 is supplied to the PU control element 40. Namely, since it is not necessary to supply the temperature data S6 to the microcomputer 25, a signal line for supplying the data S6 to the microcomputer 25 is unnecessary.

### (4) Control of Photodetecting Element

The pickup 10 has the photoelectric converting IC 38 for detecting a laser light irradiated onto the disc and outputting a read-out signal, and the photoelectric converting IC 39 for the front monitoring of the laser light source. In the present invention, these ICs 38 and 39 can also be controlled by the PU control element 40 within the pickup 10. Namely, the photoelectric converting ICs 38 and 39 can be controlled by the short control signal lines S7 and S8 from the PU control element 40. As the control of the photoelectric converting IC, the gains of the photoelectric converting ICs can be switched by the control signal from the PU control element 40, for example. It is very effective from a viewpoint of detecting accuracy to shorten the control lines of a device, such as the photoelectric converting IC, which is easily influenced by an external noise.

### (5) Control of High Frequency Superimposing IC

As mentioned above, high frequency signals are superimposed on the DVD recording/reproducing LD 31 and the CD recording/reproducing LD 32 by the high frequency superimposing ICs 36 and 37. The high frequency signal has an order of several hundred MHz and possibly becomes noise sources directly or via the control lines. In the present invention, the control of the high frequency superimposing ICs is performed, not by the external microcomputer 25, but by the PU control element 40 within the pickup 10, which controls their ON/OFF or an electric current quantity. For this reason, the control lines S9 and S10 from the PU control element 40 to the high frequency superimposing ICs can be shortened, and this is very advantageous in suppressing an unnecessary radiation quantity via the control lines S9 and S10.

### (6) Others

As mentioned above, since a number of wirings between the pickup 10 and the main board 20 can be reduced, the plasticity of the signal lines (in most cases , they are provided to a flexible cable) is improved, and wiring of the signal lines becomes easy. Moreover, since a mechanical resistance is reduced, the drive unit of the pickup which transfers the pickup in the radial direction of the disc can be miniaturized, and high speed access becomes possible at the time of recording/reproducing information.

In addition, since the electric parts provided on the pickup 10 are basically controlled by the PU control element 40 in the pickup 10, the respective control signal lines can be shortened, and hence the problems of the influence of noise and delay of high speed control can be effectively suppressed.

Further, as shown in FIG. 1, it is preferable that a number of the signal lines for connecting the pickup 10 and the microcomputer 25 are as small as possible. From this point, it is advantageous that various controls necessary within the pickup 10 is executed by the PU control element 40 in the pickup 10. Moreover, since the ground (GND) levels of the electric circuit on the pickup 10 can be independent from the electric circuit on the main board 20, the power source management on the pickup 10 can be carried out independently of the main board 20, and it is possible to prevent the noise generated on the main board 20 from affecting the control of the pickup 10.

In addition, since the PU control element 40 is provided within the pickup 10, the signal lines from the PU control element 40 to the respective electric parts can be shortened, and thus there is an advantage that the miniaturization of the entire pickup becomes easy.

As explained above, according to the present invention, the control of the electric parts provided in the pickup is executed, not by the external microcomputer, but by the control element provided within the pickup. Therefore, the signal lines between the respective electric parts and the control element can be shortened, thereby suppressing the influence of noise. Moreover, the entire pickup can be miniaturized by the shortening of the signal lines, and the electric source management or the like can be performed independently on the pickup side.

## Claims

1. A pickup device (10) comprising:
a controlled element (13) to be electrically controlled;
a connector (16) connected with an external microcomputer (25) via an external signal line (30);
an in-pickup control element (40) connected with the controlled element (13) via an internal signal line for transmitting a control signal via the internal signal line and controlling the controlled element.

2. The pickup device (10) according to claim 1, wherein the controlled element includes a laser diode driver (33) for driving a laser diode (31, 32) generating a laser light, and the in-pickup control element receives the control signal from the microcomputer via the connector (16) and supplies the control signal to the laser diode driver (33) via the internal signal line.

3. The pickup device (10) according to claim 2, wherein the in-pickup control element (40) receives and stores recording power setting value information for test recording for determining an optimum recording power from the microcomputer (25) before the test recording is executed, and supplies the stored recording power setting value to the laser diode driver (33) at the time of the test recording to execute the test recording.

4. The pickup device (10) according to claim 3, wherein the in-pickup control element (40) starts the test recording in response to a starting instruction signal for the test recording.

5. The pickup device (10) according to claim 2 , wherein the controlled element (13) includes a high frequency superimposing circuit (36, 37) for superimposing a high frequency electric current on the recording signal supplied to the laser diode (33) , and the in-pickup control element (40) controls on/off of superimposing of the high frequency electric current or a quantity of the high frequency electric current to be superimposed by the control signal supplied to the high frequency superimposing circuit (36, 37) via the internal signal line.

6. The pickup device (10) according to claim 1 to 5, wherein the controlled element (13) includes an optical correcting element (34) having a liquid crystal element, and the in-pickup control element (40) supplies a driving signal for driving the liquid crystal element to the liquid crystal element via the internal signal line.

7. The pickup device (10) according to claim 1, wherein the controlled element (13) includes a temperature sensor (35) for detecting a temperature of the pickup device, and the in-pickup control element (40) receives temperature data detected by the temperature sensor (35) via the internal signal line.

8. The pickup device (10) according to claim 1, wherein the controlled element (13) includes a photoelectric converting element (38, 39) for receiving the laser light and outputting a corresponding electric signal, and the in-pickup control element (40) supplies a control signal for changing a gain of the photoelectric converting element (38, 39) to the photoelectric converting element via the internal signal line.

9. A drive device (1) comprising:
a controlled element (13) to be electrically controlled;
a connector (16) connected with an external microcomputer (25) via an external signal line (30);
an in-pickup control element (40) connected with the controlled element (13) via an internal signal line for transmitting a control signal via the internal signal line and controlling the controlled element;
an external board (20) on which the external microcomputer is arranged; and
a pickup board (14) on which the controlled element and the in-pickup control element are arranged, wherein the pickup board (14) is connected with the external board (20) via the connector (16) and the external signal line (30).
